# DEMANDE DE BREVET EUROPEEN

(11) **EP 0 860 724 A1**
(43) Date de publication de la demande: **26.08.1998**
(21) Numéro de dépôt: 98400352.5
(22) Date de dépôt: 16.02.1998
(51) Int. Cl.: G02B 6/42

(54) **Procédé d'assemblage d'un dispositif opto-hybride**

(30) Priorité: 24.02.1997 FR 9702165
(71) Demandeur: ALCATEL ALSTHOM COMPAGNIE GENERALE D'ELECTRICITE, 75008 Paris (FR)
(72) Inventeur: Artigue, Claude, 92340 Bourg La Reine (FR); Tregoat, Denis, 91190 Gif Sur Yvette (FR); Mallecot, Franck, 92120 Montrouge (FR); Grard, Emmanuel, 91240 St Michel Sur Orge (FR)
(74) Mandataire: Fournier, Michel Robert Marie

(57) **Abrégé**

L'invention se rapporte à un procédé d'assemblage d'un dispositif opto-hybride comprenant un composant passif (1) couplé optiquement à un composant actif (2). Le composant passif (1) est réalisé dans des couches de silice (6, 7, 8) sur un substrat en silice, les couches et le substrat formant une structure silice sur silice (100). Le procédé est particulièrement caractérisé en ce qu'il consiste à :
- réaliser un élément intermédiaire (4) ayant une bonne conductivité thermique et un coefficient de dilatation thermique similaire à celui du composant actif (2),
- fixer le composant actif (2) sur l'élément intermédiaire (4),
- former une cavité (5) dans la structure silice sur silice (100) et fixer l'élément intermédiaire (4) sur cette structure (100) de sorte que le composant actif (2) est placé à l'intérieur de la cavité (5) et couplé optiquement au composant passif (1).

## Description

La présente invention se rapporte à un procédé d'assemblage d'un dispositif opto-hybride. Un dispositif opto-hybride est défini comme étant un élément comprenant un composant optoélectronique actif couplé optiquement à un composant passif. Cet élément est destiné à être renfermé dans un module optique auquel plusieurs fibres optiques peuvent être raccordées.

Des dispositifs opto-hybrides ont déjà été réalisés dans l'art antérieur. Il existe notamment des éléments, tels qu'illustrés sur le schéma en perspective de la figure 1A, comportant un composant passif 1 en silice et un composant optoélectronique 2, de type laser ou amplificateur optique par exemple, tous deux supportés par un substrat 3 en silicium.

Le composant passif 1, est en fait réalisé par empilement de trois couches successives de silice 6, 7, 8 sur le substrat 3 en silicium. La deuxième couche 7 de silice est gravée selon une forme particulière et constitue le guide de lumière du composant passif 1. Dans l'exemple représenté sur la figure 1A, ce guide est rectiligne mais il peut se présenter sous une autre forme, tout dépend de la fonction qu'il doit assurer. Cette deuxième couche de silice 7 est par ailleurs réalisée de telle sorte qu'elle présente un indice de réfraction plus élevé que celui des deux autres couches 6 et 8. La deuxième couche 7 équivaut donc au coeur d'une fibre optique, tandis que les deux autres couches 6 et 8 équivalent à la gaine de cette fibre optique.

L'ensemble constitué par les couches de silice 6, 7, 8 formant le composant passif et par le substrat 3 de silicium est couramment appelé structure silice sur silicium et noté SiO₂/Si.

Un logement 5 est défini dans les couches de silice 6, 7, 8 et, à proximité du substrat 3 en silicium. Le composant optoélectronique 2 est alors placé à l'intérieur de ce logement 5 de sorte que son axe optique 9 soit aligné avec le guide de lumière 7 du composant passif 1.

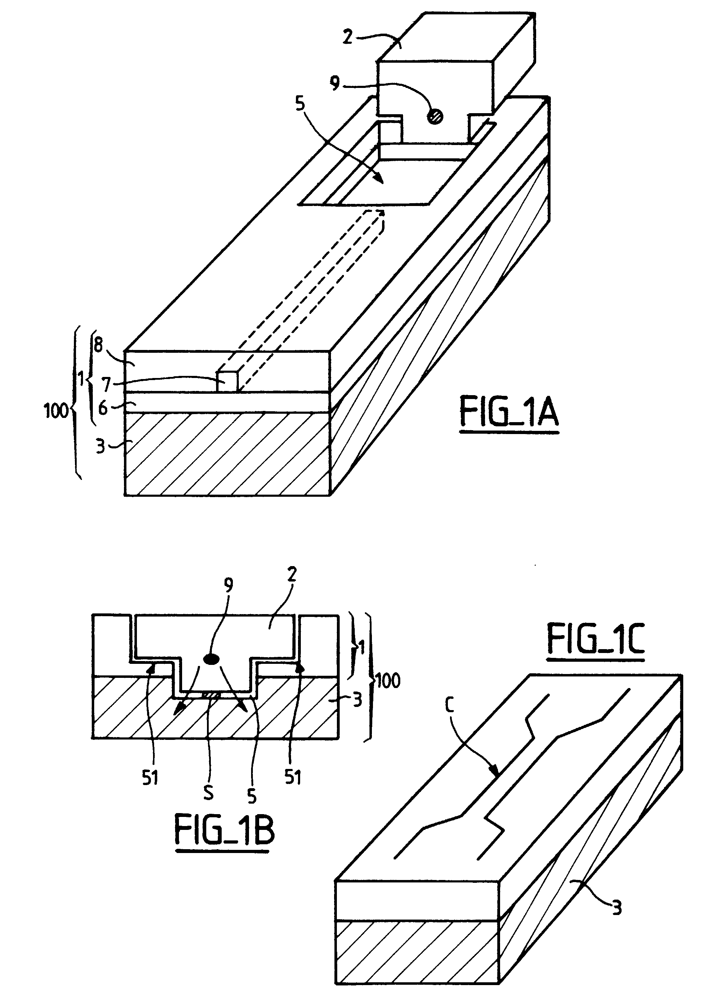

L'alignement entre l'axe optique 9 du composant actif 2 et le guide de lumière 7 du composant passif 1 doit être très précis, c'est à dire de l'ordre ou inférieur au micron µm (1µm = 10⁻⁶ mètres). Pour cela, la cavité 5 doit présenter une structure permettant de bloquer le composant optoélectronique 2 dans sa position, tel qu'illustré sur la vue en coupe transversale de la figure 1B. Sur cette figure, la cavité 5 comporte des gradins 51 de manière à épouser la forme du composant actif. De plus, les dimensions de la cavité 5 sont définies avec une précision de l'ordre ou inférieure au micron. Un point de soudure S permet en outre de fixer le composant actif 2 au fond de la cavité.

Les flèches représentées sur la figure 1B indiquent la direction par laquelle s'évacuent les calories émises par le composant optoélectronique 2.

Ce type d'élément opto-hybride a été évoquée notamment dans le document intitulé "Thermal resistance and soldering stress analyses on LD-mount-structures for planar lightwave circuits" I. Kitazawa et al, IOOC'95, FA3-5, pp 26-29.

L'utilisation de ce type d'élément opto-hybride est cependant très limitée. Ceci est essentiellement dû au fait que le silicium possède un coefficient de dilatation thermique très différent de celui de la silice. Par conséquent, après avoir déposer les couches successives 6, 7, 8 de silice à une température comprise entre 400°C et 1400°C sur le substrat en silicium, et après avoir refroidit l'ensemble jusqu'à la température ambiante, la structure silice sur silicium ainsi obtenue présente une forme courbée, très déformée. Cette déformation engendre des contraintes qui se propagent dans les différentes couches de silice.

Ces contraintes ne sont pas gênantes lorsque l'on désire réaliser un guide droit. En revanche, elles constituent un gros inconvénient lorsque l'on désire réaliser d'autres types de composants passifs tel qu'un diviseur de puissance par exemple, c'est à dire un coupleur à 3dB de pertes.

En effet, la polarisation optique tourne dans les fibres optiques. Lorsque la lumière issue d'une fibre optique est injectée dans un coupleur à 3dB, il est essentiel d'avoir un composant capable de diviser la puissance optique quelque soit la polarisation. Les contraintes générées dans les couches de silice rendent la fonction passive d'un tel coupleur sensible à la polarisation si bien que ce type de composant passif ne peut pas fonctionner correctement.

Une solution à ce problème, représentée sur la figure 1C, consiste à utiliser un support 3 en silice fondue, c'est à dire en silice amorphe. On parle alors de structure silice sur silice notée SiO₂/SiO₂. Dans cet exemple, le composant passif schématisé est un coupleur C. Dans ce cas, le substrat 3 et les couches de silice définissant le coupleur C ont des coefficients de dilatation thermique très proches, si bien qu'aucune contrainte ne se crée dans les couches de silice. Le composant passif est alors insensible à la polarisation.

Une telle solution est par exemple décrite dans l'article intitulé "Prospects for silica and glass-based IO components", S. Kobayashi et al, ECIO'95, We A3, pp 309-314.

Néanmoins, il s'avère que, contrairement au silicium, la silice fondue est un mauvais dissipateur thermique. Or, lorsque l'on réalise un élément opto-hybride, il est nécessaire de pouvoir évacuer les calories émises par le composant optoélectronique.

Le problème à résoudre consiste donc à trouver un moyen permettant de réaliser, sur un substrat en silice fondue, un élément opto-hybride, c'est à dire un élément comprenant à la fois un composant actif et un composant passif, les deux composants étant optiquement couplés l'un à l'autre.

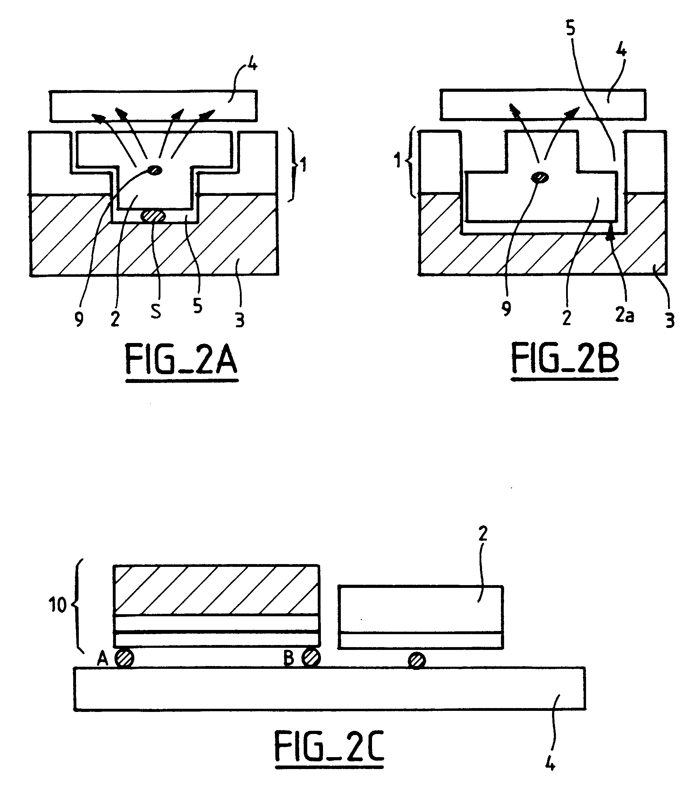

Une première solution qui vient à l'esprit pour résoudre ce problème est représentée sur le schéma d'une vue en coupe transversale de la figure 2A. Cette solution consiste à recouvrir le composant actif 2 par un support en silicium 4 apte à dissiper la chaleur dégagée par ledit composant actif. La direction d'évacuation des calories émises est représentée par des flèches sur la figure 2A.

Cette première solution n'est cependant pas optimale car elle présente un inconvénient majeur. En effet, l'évacuation des calories s'effectue au travers du composant actif 2 si bien que ce dernier présente un fonctionnement très perturbé. Les qualités de ce composant optoélectronique sont de surcroît très dégradées et sa durée de vie est considérablement amoindrie.

De plus, dans ce cas, le maintient du support en silicium 4 n'est pas défini. Il peut éventuellement être fixé par collage sur la structure silice sur silice. Dans tous les cas, ce support ne contribue pas à l'alignement des composants actif et passif. C'est uniquement la forme de la cavité 5 et le point de soudure S qui permettent de réaliser cet alignement, tout comme dans l'art antérieur précédemment décrit et correspondant aux figures 1A et 1B.

Pour éviter l'évacuation de calories à travers le composant optoélectronique, une autre solution consisterait à retourner ledit composant tel qu'illustré sur la figure 2B. Dans ce cas en effet les calories s'évacuent au plus près, vers le support en silicium 4, sans traverser le composant actif 2. Le support en silicium 4 joue le rôle de passage thermique.

La face arrière 2a du composant optoélectronique 2 est amincie avec une précision de ±10 µm, par polissage, sans aucune référence par rapport à la fonction active 9. Le passage thermique 4 est monté du côté de l'axe optique 9 du composant optoélectronique 2. Un tel passage thermique n'a qu'une vocation de dissipateur thermique. Il permet en plus, éventuellement, d'encapsuler la puce 2 . Mais il ne peut en aucune façon contribuer au bon alignement de l'axe optique 9 du composant actif 2 par rapport au guide de lumière du composant passif 1 puisque cette fonction d'alignement est incompatible avec les tolérances élevées (±10 µm) d'amincissement de la face arrière 2a du composant optoélectronique. En conséquence, cette deuxième solution ne peut pas non plus être retenue.

Un autre type de dispositif opto-hybride, schématisé sur la vue en coupe longitudinale de la figure 2C, a par ailleurs été proposé dans l'art antérieur. Ce dispositif comporte un composant optoélectronique 2, un passage thermique ou "pont" en silicium 4 et une structure silice sur silicium 10 sur laquelle est réalisé au moins un composant passif. Cette structure 10 peut également être une structure silice sur silice.

Dans ce cas, le pont 4 en silicium joue à la fois le rôle de dissipateur thermique et le rôle de support commun au composant actif 2 et à la structure silice sur silicium 10.

Pour supporter ces deux types de composants, il faut donc que la surface du pont 4 soit relativement grande, c'est à dire typiquement supérieure à 0,1 cm². Cette surface peut atteindre quelques cm². La structure silice sur silicium 10 est fixée sur le pont 4 en deux points dénommés points d'appui A et B. La distance entre ces deux points d'appui A et B est du même ordre de grandeur que la taille de la structure 10. Elle est par conséquent relativement grande, et peut être comprise entre 1 mm et quelques cm.

Cette grande distance entraîne des problèmes de cisaillements qui se créent au niveau des points d'appui A et B au cours des applications standards de télécommunications qui sont effectuées à des températures pouvant varier de -40°C à +85°C. Ces problèmes de cisaillements sont en fait dus à la différence de coefficient de dilatation thermique entre la silice de la structure 10 silice sur silicium, ou silice sur silice, et le pont 4 en silicium.

La présente invention permet de pallier tous les inconvénients précités puisqu'elle concerne un procédé d'assemblage d'un dispositif opto-hybride selon lequel on utilise un support de silicium apte à la fois à dissiper la chaleur dégagée par le composant actif et à aligner l'axe optique dudit composant actif par rapport au guide de lumière du composant passif.

L'invention se rapporte plus particulièrement à un procédé d'assemblage d'un dispositif opto-hybride comprenant un composant passif couplé optiquement à un composant actif, ledit composant passif étant réalisé dans des couches de silice sur un substrat en silice, lesdites couches et le substrat formant ainsi une structure silice sur silice, caractérisé en ce qu'il consiste à :
- réaliser un élément intermédiaire ayant une bonne conductivité thermique et un coefficient de dilatation thermique similaire à celui du composant actif,
- fixer le composant actif sur l'élément intermédiaire,
- former une cavité dans la structure silice sur silice et fixer l'élément intermédiaire sur cette structure de sorte que le composant actif se trouve à l'intérieur de la cavité et est couplé optiquement au composant passif.

Selon une autre caractéristique de l'invention, le procédé consiste en outre à réaliser des butées sur l'élément intermédiaire, des repères sur le composant actif, et des marquages sur la structure silice sur silice, de manière à positionner une première sorte de butées contre les repères du composant actif et à positionner une deuxième sorte de butées contre les marquages de la structure silice sur silice.

Selon une autre caractéristique de l'invention, l'élément intermédiaire est réalisé en silicium.

Un autre objet de l'invention concerne un dispositif opto-hybride comprenant un composant actif couplé optiquement à un composant passif, ledit composant passif étant réalisé dans des couches de silice sur un substrat en silice, lesdites couches et le substrat formant une structure silice sur silice, caractérisé en ce qu'il comprend en outre un élément intermédiaire ayant une bonne conductivité thermique et un coefficient de dilatation thermique similaire à celui du composant actif, et une cavité creusée dans la structure silice sur silice, et en ce que l'élément intermédiaire est assemblé à la fois au composant actif et à la structure silice sur silice de manière que le composant actif se trouve à l'intérieur de la cavité et est couplé optiquement avec le composant passif.

Selon une autre caractéristique de l'invention l'élément intermédiaire comporte des butées aptes à se positionner d'une part contre des repères situés sur le composant actif et d'autre part contre des marquages situés sur la structure silice sur silice.

Selon une autre caractéristique de l'invention l'élément intermédiaire est en silicium.

Selon une autre caractéristique de l'invention, l'élément intermédiaire présente une taille réduite et sa surface est juste supérieure à celle du composant actif.

Selon une autre caractéristique de l'invention l'élément intermédiaire présente une surface inférieure au mm², et la structure silice sur silice (100) présente une surface supérieure au mm².

Selon une autre caractéristique de l'invention, le composant actif est monté "à l'endroit" dans la cavité.

Selon une autre caractéristique de l'invention, la cavité est partielle et l'élément intermédiaire est placé au dessus de cette cavité de manière à participer à l'encapsulation du composant actif.

Le dispositif opto-hybride selon l'invention présente de nombreux avantages du fait notamment du faible coût du substrat en silice fondue, et de la simplification importante qui résulte de son utilisation pour la conception de systèmes optiques à base de composants insensibles à la polarisation.

Le procédé d'assemblage selon l'invention peut en outre être appliqué à la fabrication de composants d'accès, de type TRD ("Transmit-Receive Device"), ou à la commutation. Les avantages pour les deux types d'application, c'est à dire pour les composants de type TRD et pour la commutation, proviennent d'une part du fait que le procédé selon l'invention utilisant des éléments plan, il est compatible avec des productions en grande masse; et d'autre part de l'utilisation de composants silice sur silice insensibles à la polarisation optique et donc permettant des simplifications des circuits en ligne. De plus, le dissipateur thermique est très important pour les applications de commutation où la densité de composants optoélectroniques sur structure est forte.

D'autres particularités et avantages de l'invention apparaîtront à la lecture de la description faite à titre d'exemple illustratif mais non limitatif en référence aux figures annexées qui représentent :
- la figure 1A, déjà décrite, un schéma en perspective d'un élément opto-hybride de l'art antérieur,
- la figure 1B, déjà décrite, un schéma d'une vue en coupe transversale de l'élément de la figure 1A,
- la figure 1C, déjà décrite, un schéma en perspective d'un composant passif de type coupleur à 3dB de l'art antérieur,
- la figure 2A, déjà décrite, un schéma d'une coupe transversale d'un autre élément opto-hybride de l'art antérieur,
- la figure 2B, déjà décrite, un schéma d'une coupe transversale d'un autre élément opto-hybride,
- la figure 2C, déjà décrite, un schéma d'une coupe longitudinale d'un autre dispositif opto-hybride de l'art antérieur,
- la figure 3, un schéma en perspective d'un élément opto-hybride selon l'invention,
- la figure 4, un schéma d'une coupe longitudinale de l'élément de la figure 3,
- la figure 5, un schéma d'une coupe transversale d'une variante de réalisation d'un élément opto-hybride selon l'invention.

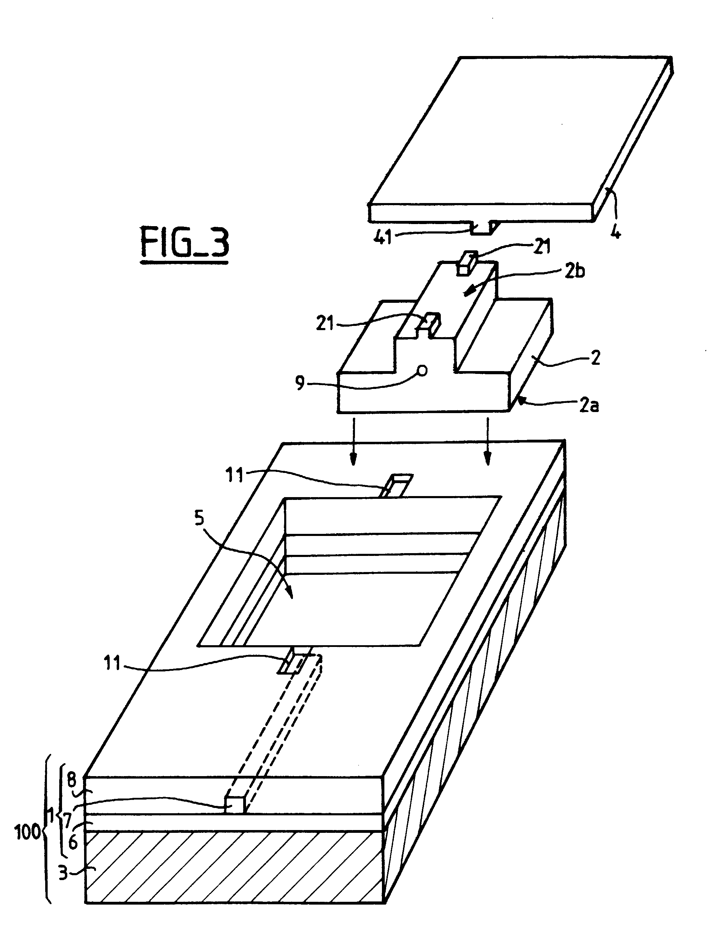

La figure 3 illustre la structure d'un élément opto-hybride selon l'invention et permet de mieux comprendre la manière dont il est assemblé. Cet élément opto-hybride comprend un composant optoélectronique 2 actif, de type laser ou amplificateur optique par exemple, encore dénommé puce, et un composant passif 1 de type guide de lumière rectiligne ou coupleur à 3 dB ou autre.

Le composant passif 1 est réalisé selon un procédé connu, par empilement de couches successives 6, 7, 8 de silice, sur un substrat 3 en silice fondue. La couche intermédiaire 7 constitue le coeur du composant passif et est gravée sous une forme particulière selon la fonction du guide de lumière à réaliser. Les deux autres couches 6 et 8 constituent la gaine du composant passif. Le substrat en silice fondue permet d'éviter la formation de contraintes dans les couches 6, 7, 8 de silice et d'obtenir par conséquent un composant passif de bonne qualité, insensible à la polarisation. Dans la description ci-après, l'ensemble formé par le composant passif 1 et le substrat 3 en silice est appelé structure silice sur silice et est référencé 100.

Dans une variante de réalisation, le coeur 7 du composant passif peut également être réalisé dans une couche de nitrure de silicium (Si₃N₄).

Une cavité 5 est pratiquée dans la structure silice sur silice 100, c'est à dire dans les couches successives 6, 7, 8 de silice et éventuellement dans le substrat 3, de manière à pouvoir y loger le composant optoélectronique 2. Cette cavité 5 peut être partielle ou alors débouchante. Ce sera bien souvent le coût de réalisation ainsi que le besoin d'encapsulation du composant actif 2 qui détermineront la nature débouchante ou partielle de cette cavité. Le composant optoélectronique 2 est destiné à être inséré dans la cavité 5 de manière à ce que son axe optique 9 soit aligné avec le guide de lumière 7 du composant passif 1.

Le composant optoélectronique 2 est par exemple un laser de type GaInAsP sur InP réalisé de manière classique, par épitaxie et dont la puissance est comprise entre 1 et 200 mW. Préalablement à son insertion dans la cavité 5, le laser 2 est fixé, par soudure par exemple, sur un élément intermédiaire 4 destiné à dissiper la chaleur émise. La taille de cet élément intermédiaire est relativement réduite, sa surface est en fait juste supérieure à celle de la cavité 5, c'est à dire à celle du composant actif 2. La puce 2 est insérée dans la cavité 5 de telle sorte qu'elle est montée "à l'endroit". Par contre elle est placée "à l'envers" sur l'élément intermédiaire 4, on dit encore qu'elle est montée sur cet élément selon un montage "flip chip".

Par ailleurs, pour pouvoir aligner l'axe optique 9 du laser 2 par rapport au guide de lumière 7 du composant passif 1, il est nécessaire de pouvoir positionner très précisément le dissipateur thermique 4 par rapport au laser 2 d'une part et par rapport au composant passif 1 d'autre part. Pour cela, des butées, ou repères, sont réalisés à la fois sur l'élément intermédiaire 4 et sur les composants actif 2 et passif 1. Ces repères sont par exemple réalisés par lithographie, gravure RIE ("Reactive Ion Etching") ou par tout autre procédé de gravure.

Ainsi, des butées, non visibles sur la figure 3, sont réalisées sur la surface inférieure du dissipateur thermique 4 de manière à ce qu'elles puissent venir se positionner contre des repères 21 pratiqués par exemple sur la surface avant 2b du laser 2. De même, des butées 41 sont réalisées sur la surface inférieure du dissipateur thermique 4 de manière à ce qu'elles puissent se positionner contre des marquages, ou dans des évidements 11 tels que représentés dans l'exemple de la figure 3, pratiqués sur la surface supérieure de la structure silice sur silice 100.

L'élément intermédiaire 4 étant positionné à la fois par rapport au laser 2 et par rapport au composant passif 1, les deux composants actif et passif sont, par suite de transitivité, positionnés l'un par rapport à l'autre.

Le positionnement des butées du dissipateur thermique contre les repères 21 du laser 2 est réalisé très précisément, à moins d'un micron.

De la même manière, les butées 41 du dissipateur thermique sont réalisées de sorte qu'elles puissent se positionner contre les marquages 11 de la structure 100 avec une grande précision, inférieure au micron.

Dans l'exemple représenté sur la figure 3, les repères 21 du laser 2 sont alignés avec son axe optique 9, les repères 11 du composant passif 1 sont alignés avec le guide optique 7 en silice et enfin les deux sortes de butées de l'élément intermédiaire 4 sont alignées respectivement avec les repères du laser et avec les repères du composant passif. Bien sûr, ces emplacements des butées et repères n'est qu'un exemple. Ils peuvent en effet être placés autrement, du moment qu'ils permettent de fixer les composants actifs et passifs par rapport au dissipateur thermique 4 et donc de les aligner l'un par rapport à l'autre.

Sur la figure 3, par soucis de simplification, le guide optique 7 du composant passif 1 est représenté rectiligne, mais il peut être de forme plus complexe et notamment, ce peut être un coupleur à 3 dB par exemple.

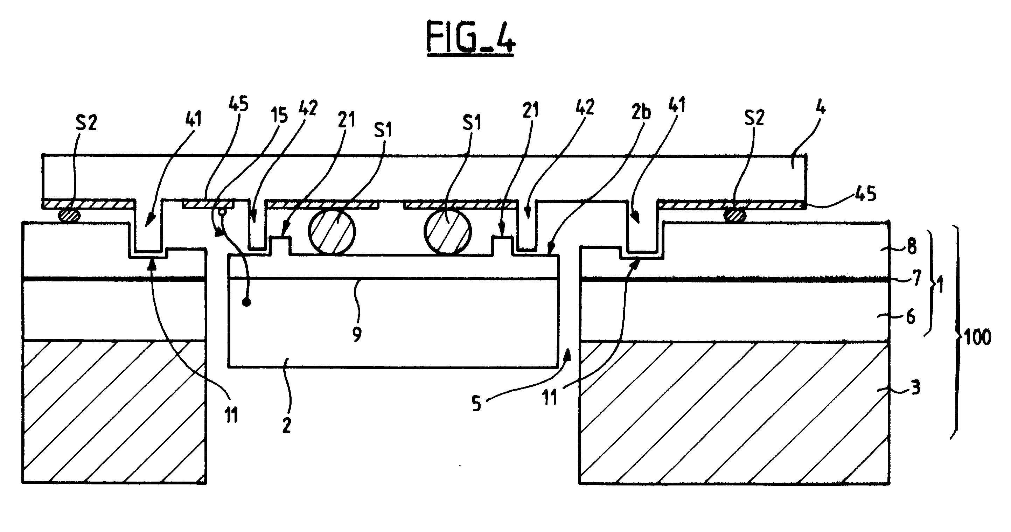

La figure 4 représente un schéma d'une coupe longitudinale de l'élément opto-hybride de la figure 3. Les mêmes références que sur la figure 3 sont utilisées pour désigner les mêmes éléments. Le composant passif 1 est réalisé par empilement de couches de silice 6, 7, 8. Il comprend un coeur 7, ou guide optique, gravé aux dimensions souhaitées et noyé dans des couches de gaine 6 et 8. Dans cet exemple la cavité 5 creusée dans les couches de silice du composant passif et dans le substrat 3 est débouchante. Cette cavité 5 permet d'y loger le composant optoélectronique actif 2 de manière à ce que l'axe optique 9 de ce dernier soit aligné au guide optique 7 du composant passif 1. La puce 2 est fixée sur des connexions électriques 45 de l'élément intermédiaire 4, jouant le rôle de dissipateur thermique, au moyen des points de soudure S1.

Le dissipateur thermique 4 est de préférence en silicium car ce matériau a un coefficient de dilatation thermique similaire à celui de la puce GaInAsP/InP 2 si bien qu'il permet d'éviter la création de cisaillements susceptibles de se propager notamment aux points de soudure S1 réalisés entre la puce 2 et l'élément intermédiaire 4.

Bien sûr, l'élément intermédiaire 4 peut être réalisé dans d'autres matériaux, tels que l'alumine (Al₂O₃) ou l'arséniure de Gallium (GaAs) par exemple. Cependant GaAs est plus coûteux que le silicium et Al₂O₃ ne permet pas de réaliser des butées avec une aussi grande précision, inférieure au micron, afin de permettre un alignement très précis des axes optiques des composants actifs et passifs.

Dans l'exemple décrit, le substrat 3 est en silice fondue. Selon une variante de réalisation, il pourrait éventuellement être en quartz mais ce matériau est plus coûteux que la silice.

Par ailleurs, des butées 42, prévues sur la surface inférieure du dissipateur thermique 4, sont destinées à venir se positionner tout contre des repères 21 pratiqués sur la face avant 2b du laser 2.

D'autres butées 41 sont prévues sur la surface inférieure du dissipateur thermique 4 pour venir se loger contre des marquages 11 réalisés sur la surface supérieure de la structure silice sur silice 100. La structure silice sur silice 100 est en outre fixée sur le dissipateur thermique 4 par des points de soudure S₂ appliqués sur les connexions électriques 45 de ce dernier.

Les butées 41, 42 de l'élément intermédiaire 4, les repères 21 du laser 2 et les marquages 11 du composant passif 1 sont, dans l'exemple de la figure 4, alignés avec l'axe optique 9 du laser et le guide optique 7 du composant passif.

Il est à noter par ailleurs que la structure silice sur silice 100 utilisée pour réaliser le dispositif opto-hybride selon l'invention possède de grandes dimensions. En effet, sa surface est supérieure à quelques mm² et peut atteindre quelques dizaines de cm². Au contraire, le "pont" ou dissipateur thermique 4 utilisé dans la présente invention présente une surface de petite dimension, inférieure au mm². Cette petite surface permet de limiter la distance entre les deux points de soudure S2 réalisés entre la structure de silice sur silice 100 et le dissipateur thermique 4 et, par conséquent, de limiter les risques notamment de cisaillements susceptibles de se produire, du fait de la différence des coefficients de dilatation thermique existante entre le silicium et la silice, au cours des utilisations standards en télécommunication qui sont effectuées à des températures pouvant varier de -40°C à +85°C. Ceci constitue donc un gros avantage par rapport à l'art antérieur décrit précédemment et correspondant à la figure 2C.

La puce 2 est montée sur l'élément intermédiaire 4 en "flip chip"; la zone sous l'axe optique 9 est dopée en porteurs d'un premier type, par exemple de type n, tandis que la zone située au-dessus de l'axe optique 9 est dopée en porteurs d'un deuxième type, par exemple de type p. Les points de soudure S1 destinés à connecter la puce et le dissipateur représentent donc des électrodes d'un deuxième type, dans l'exemple des électrodes positives. L'électrode du premier type, dans l'exemple l'électrode négative, quant à elle, peut par exemple être constituée par un fil conducteur 15 soudé à la fois aux connections 45 du dissipateur et à la zone du laser 2 dopée en porteur de type n.

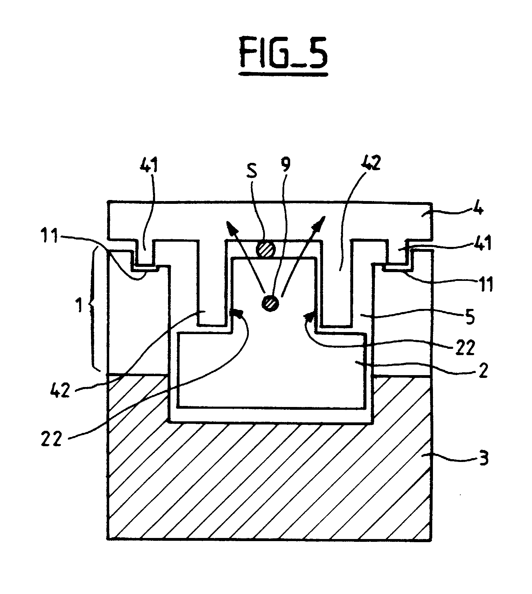

La figure 5 représente le schéma d'une vue en coupe transversale d'une variante de réalisation d'un dispositif opto-hybride selon l'invention. Dans ce cas, les butées 41 et 42 de l'élément intermédiaire 4 ne sont pas alignées avec les axes optiques des composants actif 2 et passif 1, mais elles sont réalisées le long d'une direction perpendiculaire à ces axes optiques. Des marquages 11 sont creusés dans la surface supérieure de la structure silice sur silice 100 de manière à pouvoir y appuyer les butées 41 du dissipateur thermique 4 et à aligner ce dernier par rapport au composant passif 1. Par ailleurs, des butées 42 du dissipateur thermique 4 sont prévues de manière à être positionnées contre les parois latérales 22 de la surface avant 2b du laser 2.

Des points de soudure S1, dont un est visible sur la figure 5, permettent de maintenir fixement le laser 2 sur le dissipateur thermique 4. Les points de soudure permettant de fixer la structure silice sur silice 100 sur le dissipateur ne sont pas visibles sur cette figure. Par conséquent, l'élément intermédiaire 4 étant à la fois fixé par rapport au composant passif et par rapport au composant actif, ces deux composants sont fixés et alignés l'un par rapport à l'autre.

Dans l'exemple représenté sur la figure 5, la cavité 5 est partielle. Par conséquent, dans ce cas, l'élément intermédiaire 4, placé au dessus de la cavité, participe à l'encapsulation du composant actif. Les flèches représentées illustrent la direction selon laquelle les calories, émises par le laser 2, s'évacuent.

Les exemples qui viennent d'être décrits se rapportent tous à un dispositif comprenant un composant actif et un composant passif. Bien sûr, on peut très bien envisager de réaliser, de la même manière, un dispositif comprenant plusieurs autres composants passifs, plusieurs autres cavités et plusieurs autres éléments intermédiaires assemblés chacun à un composant actif et à la structure silice sur silice de sorte que chaque composant actif se trouve à l'intérieur d'une cavité et est couplé optiquement avec un composant passif.

## Revendications

1. Procédé d'assemblage d'un dispositif opto-hybride comprenant un composant passif (1) couplé optiquement à un composant actif (2), ledit composant passif (1) étant réalisé dans des couches de silice (6, 7, 8) sur un substrat (3) en silice, lesdites couches et le substrat formant ainsi une structure silice sur silice (100), caractérisé en ce qu'il consiste à :
- réaliser un élément intermédiaire (4) ayant une bonne conductivité thermique et un coefficient de dilatation thermique similaire à celui du composant actif (2),
- fixer le composant actif (2) sur l'élément intermédiaire (4),
- former une cavité (5) dans la structure silice sur silice (100) et fixer l'élément intermédiaire (4) sur cette structure (100) de sorte que le composant actif (2) se trouve à l'intérieur de la cavité (5) et est couplé optiquement au composant passif (1).

2. Procédé selon la revendication 1, caractérisé en ce qu'il consiste en outre à réaliser des butées (41, 42) sur l'élément intermédiaire (4), des repères (21; 22) sur le composant actif (2), et des marquages (11) sur la structure silice sur silice (100), de manière à positionner une première sorte de butées (41) contre les repères (21) du composant actif (2) et à positionner une deuxième sorte de butées (42) contre les marquages (11) de la structure silice sur silice (100).

3. Procédé selon l'une des revendications 1 à 2 caractérisé en ce que l'élément intermédiaire (4) est réalisé en silicium.

4. Dispositif opto-hybride comprenant un composant actif (2) couplé optiquement à un composant passif (1) ledit composant passif étant réalisé dans des couches de silice (6, 7, 8) sur un substrat en silice (3), lesdites couches et le substrat formant une structure silice sur silice (100), caractérisé en ce qu'il comprend en outre un élément intermédiaire (4) ayant une bonne conductivité thermique et un coefficient de dilatation thermique similaire à celui du composant actif (2), et une cavité (5) creusée dans la structure silice sur silice (100), et en ce que l'élément intermédiaire (4) est assemblé à la fois au composant actif (2) et à la structure silice sur silice (100) de manière que le composant actif (2) se trouve à l'intérieur de la cavité (5) et est couplé optiquement avec le composant passif (1).

5. Dispositif selon la revendication 4, caractérisé en ce que l'élément intermédiaire comporte des butées (41, 42) aptes à se positionner d'une part contre des repères (21; 22) situés sur le composant actif (2) et d'autre part contre des marquages (11) situés sur la structure silice sur silice (100).

6. Dispositif selon l'une des revendications 4 à 5, caractérisé en ce que l'élément intermédiaire (4) est en silicium.

7. Dispositif selon l'une des revendications 4 à 6, caractérisé en ce que l'élément intermédiaire (4) présente une taille réduite et sa surface est juste supérieure à celle du composant actif (2).

8. Dispositif selon l'une des revendications 4 à 7, caractérisé en ce que l'élément intermédiaire (4) présente une surface inférieure au mm², et en ce que la structure silice sur silice (100) présente une surface supérieure à quelques mm².

9. Dispositif selon l'une des revendications 4 à 7, caractérisé en ce que le composant actif (2) est monté "à l'endroit" dans la cavité.

10. Dispositif selon l'une des revendications 4 à 9, caractérisé en ce que la cavité (5) est partielle et en ce que l'élément intermédiaire (4) est placé au dessus de cette cavité de manière à participer à l'encapsulation du composant actif (2).

11. Dispositif selon l'une des revendications 4 à 10, caractérisé en ce qu'il comporte en outre plusieurs autres cavités et plusieurs autres éléments intermédiaires assemblés chacun à un composant actif et à la structure silice sur silice de sorte que chaque composant actif se trouve à l'intérieur d'une cavité et est couplé optiquement avec un composant actif.
